# EUROPEAN PATENT SPECIFICATION

(11) **EP 0 673 516 B1**
(45) Date of publication and mention of the grant of the patent: **20.02.2002**
(21) Application number: 94928867.4
(22) Date of filing: 06.10.1994
(51) Int. Cl.: G03B 23/02, B65H 9/02

(54) **AN APPARATUS FOR WITHDRAWING AN INDIVIDUAL SHEET FROM A SHEET STACK**
VORRICHTUNG ZUM ENTNEHMEN EINES EINZELBLATTES VON EINEM BLATTSTAPEL
DISPOSITIF DESTINE A RETIRER UNE FEUILLE INDIVIDUELLE D'UNE PILE DE FEUILLES

(30) Priority: 08.10.1993 DE 4334330
(43) Date of publication of application: 27.09.1995
(73) Proprietor: Supracolor Finanz AG, CH-8750 Glarus (CH)
(72) Inventor: MAAG, Arthur, deceased (CH)
(74) Representative: Sparing - Röhl - Henseler Patentanwälte
(86) International application number: EP9403301
(87) International publication number: WO9510796

(56) References cited:
- WO-A-92/22010
- DE-C- 691 777
- US-A- 3 380 732

## Description

The invention relates to an apparatus for removing or withdrawing an individual sheet from a stack of sheets, in particular for use in a device for cyclic rearrangement of a sheet stack according to the preamble of claim 1. Such devices are disclosed in more recent publications WO 86/03029, WO 89/04991, WO 92/22010, and WO 93/15435, these publications, in turn, referring to older publications. The disclosure of all of them may disclose details not dealt with in the present description.

The principle of such sheet changers is rather old. A first frame part is formed as a housing and receives a second frame part in the form of a slider, housing and slider embracing a stack of sheets. Upon withdrawal of the slider, an individual sheet at a first stack end is retained in one of the frame members while the remaining sheets are retained in the other frame member. In an outer end position of the slider, the retained individual sheet is displaced towards the other, second stack end and is placed thereupon when the slider is pushed home into the housing. Thus, a fresh sheet of the stack will appear behind a housing window upon each complete reciprocation of the slider. Of course, the functions of housing and slider may be interchanged.

The removal of the individual sheet from the stack may be performed using relatively simple means, provided that the sheets are stiff, have stable shapes and have substantially equal dimensions. However, if the sheets are thin and easily deformable, as e.g. photographic prints having a thickness of 0,25 mm, and if their dimensions are rather different, removal of exactly one individual sheet from the stack becomes difficult. In the case of photographic prints, the problems are exacerbated because they frequently cling to one another so that considerable separating forces are required.

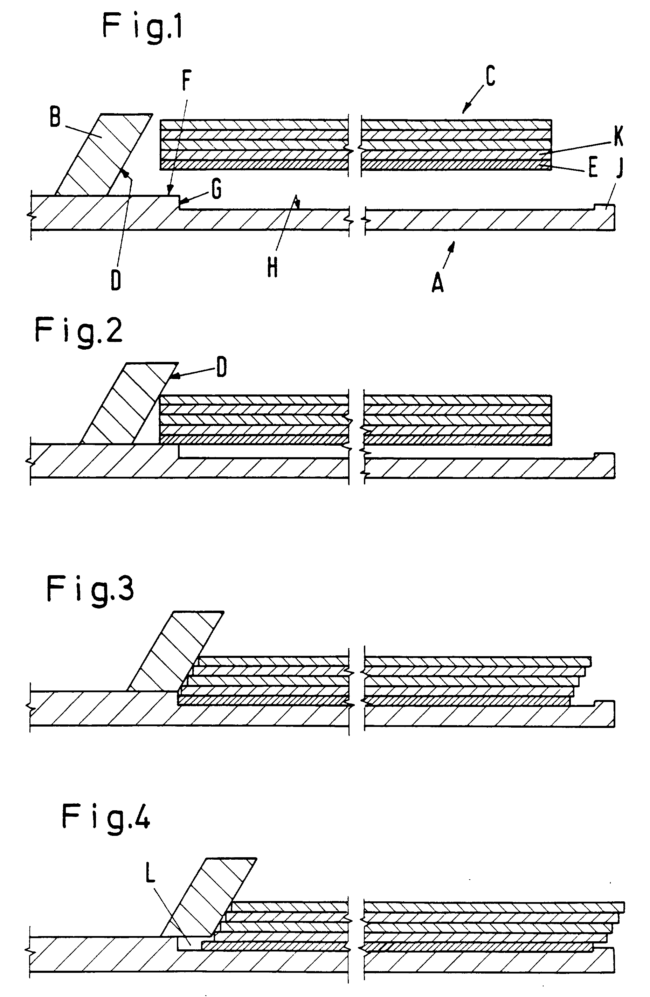

The principle of the separation process will be briefly explained with reference to Fig. 1 through 4 which illustrate schematically section views of the device parallel to the displacement direction of the frame members in four succeeding phases upon start of the withdrawal.

Member A is a portion of the first frame member, e.g. of the housing. Member B is a portion of the second frame member, of the slider in the present case. In the rest position illustrated in Fig. 1 the stack C is disposed between slider and housing and is urged upwards by means of a spring system (not shown) towards a housing window, not shown either.

Member B has an inclined surface facing first edges of the sheets. Upon start of the displacement, this slope hits these first edges, and the downward force component created thereby depresses the stack against the spring bias towards member A till the portion adjacent the first edge of lowermost sheet E engages a leading surface F upon which member B, too, is supported: Fig. 2.

Leading surface F terminates at a step G where a support surface H begins. Step G is higher than one sheet thickness but lower than two sheet thicknesses.

Upon further displacement of member B relative to member A, member B pushes the entire stack as a "block" outwards till the first edge of the lowermost sheet E has passed step G. This edge now lies beyond step G on support surface H and is "protected": See Fig. 3.

Upon further displacement of member B relative to member A, member B continues to push the "block" till the second end edge of lowermost sheet E opposite the first end edge and parallel thereto engages a stop J. Member B still abuts leading surface F and thus has no more contact with lowermost sheet E but continues to engage the remaining sheets of the stack. Member B can now freely pass across lowermost sheet E, and the sheet K adjacent sheet E may freely pass stop J together with all remaining sheets of the stack. The separation of sheet E from the remaining sheets of the stack is terminated: See Fig. 4, and member B can further displace these remaining sheets until their first end edges have passed stop J.

It is to be noted that the distance between step G and stop J must be sufficiently large that even the largest sheets within a given range of sizes may fit therebetween. In the schematic illustration of Fig. 1 through 4 sheet E is less large than this distance and a gap L is present.

It is further to be noted that in Fig. 1 and 2 the first end edges of all sheets are properly aligned in vertical direction which, in reality, is usually not true; on the contrary, normally the sheets are displaced relative to one another in a non-predictable manner and, even worse, are of different size in direction of the displacement.

Therefore, there is a certain probability that the first end edge of second sheet K overhangs the first end edge of first sheet E, and as the stack is transported as a block by member B, such an overhanging end portion may be bent into gap L. The result is desastreous because sheets E and K are not separated from one another but commonly overrun by member B. There is even the risk that sheet K, not stopped at its other, opposite end by stop J, may eventually be released from sheet E and is transported away over a partial stroke, an event tending to ruin the entire device.

From WO-A-92/22010 or WO-A-88/03280 concerning an apparatus of the preamble of claim 1 which is used to change prints of a stack taken up in the apparatus it is known to deform at least that print which is to be separated from the stack, primarily in order to stiffen it in withdrawal direction. It is implied that the prints may be bent about an axis of curvature extending orthogonal to the direction of displacement of the prints during changing.

US-A-3 380 732 concems a sheet feeding apparatus having a hopper which takes up a stack of sheets of a non-uniplanar configuration. Further, there is provided a sheet discharge device consisting of driven bars provided with tiltable hook elements on mounting means. The lowermost sheet is engaged by a shoulder of the hook elements and pushed through a dispensing opening. During this operation the remaining stack is held by the hopper. The stack of sheets is not manipulated.

It is an object of the present invention to provide an apparatus for separating an individual sheet from a stack of sheets wherein malfunction as described above is eliminated or at least minimized.

In an apparatus of the preamble of claim 1 this object is solved according to the characterizing part of claim 1.

The present invention provides an important improvement over the prior art as discussed above. While in devices of the prior art the individual sheet E was first depressed to engage the support H and was thereafter pushed in engagement with the hook elements or stops J, according to the invention sheet E and all superposed sheets including sheet K are first held above support H thanks to the spacing means, preferably at the level of leading surface F. Once sheet E is caught by stop J, member B can further push sheet K and all sheets superposed thereto even if the end portion of sheet K overhangs sheet E until the end portion of sheet E becomes accessible to member B and is depressed onto support surface H, sheet E thereby being elastically deformed and overrun by member B.

A delicate component of the system is stop J because it is expected to safely catch sheet E. If it fails to do so, member B will transport the entire stack including sheet E relative to member A. The risk of such malfunction is high if the edge of sheet E to be engaged by stop J is not straight but bent upwards or downwards, and such bends are very frequent when the sheets are photographic prints. The risk is even higher if the respective end edge of sheet E is damaged. In practice, stop J is formed by a set of hook elements, and in order to improve the retaining safety of the hooks the invention provides that these hook elements may adapt themselves by a tilting motion to curved sheet edges. For the same reason, the components forming member B -- in practice a set of retainers -- may be tiltable. These features may be utilized in devices of the prior art even without the spacing means of the present invention.

The invention will now be described with reference to the accompanying drawings.
Fig. 1 through 4 illustrate schematically the function in four succeeding phases, as discussed above,
Fig. 5 through 8 illustrate in a similar manner a concrete embodiment of the present invention,
Fig. 9 is a section along line 9-9 of Fig. 8,
Fig. 10 is a detail of Fig. 9 in an enlarged scale,
Fig. 11 shows in partial isometric view the problem of curved sheets,
Fig. 12 shows in a section view an improved rail system,
Fig. 13 illustrates the effect thereof in a transverse section view,
Fig. 14 is a detail of Fig. 13 in enlarged scale,
Fig. 15 shows in a manner similar to Fig. 13 the operation under different conditions,
Fig. 16 is a detail of Fig. 15 similar to Fig. 14,
Fig. 17 illustrates a possible rocker bearing system,
Fig. 18 is a section view along line 18-18 of Fig. 19,
Fig. 19 is a partial plan view of a rail, partly in section,
Fig. 20 is a section view along line 20-20 of Fig. 19 in enlarged scale,
Fig. 21 shows in transverse section the rocker axis,
Fig. 22 shows in section the separator bar,
Fig. 23 is a view in direction of arrow 23 of Fig. 22, and
Fig. 24 is a view in direction of arrow 24 of Fig. 22.

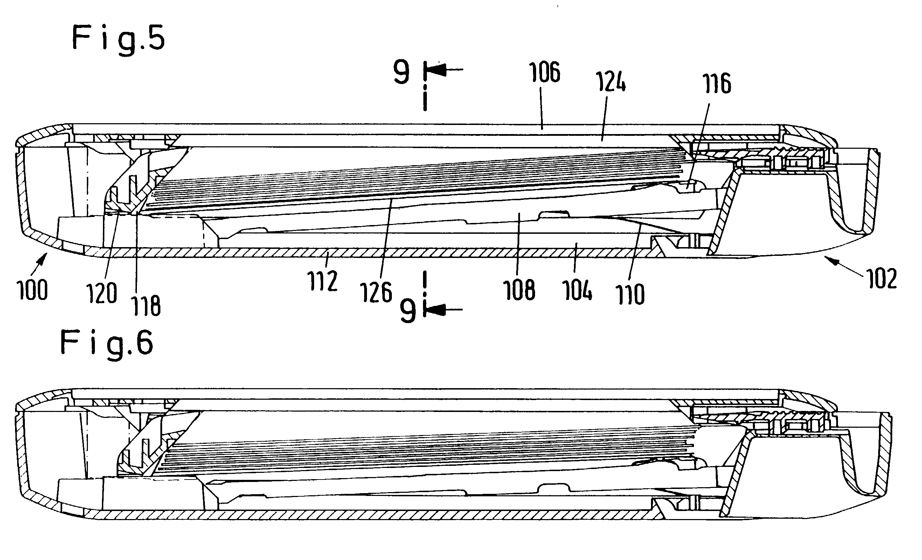

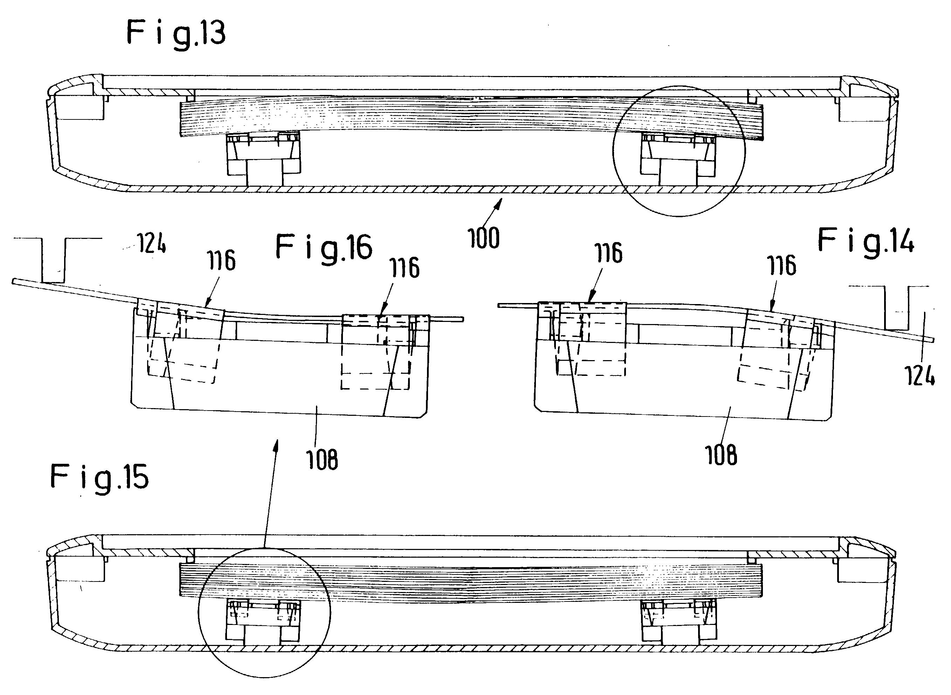

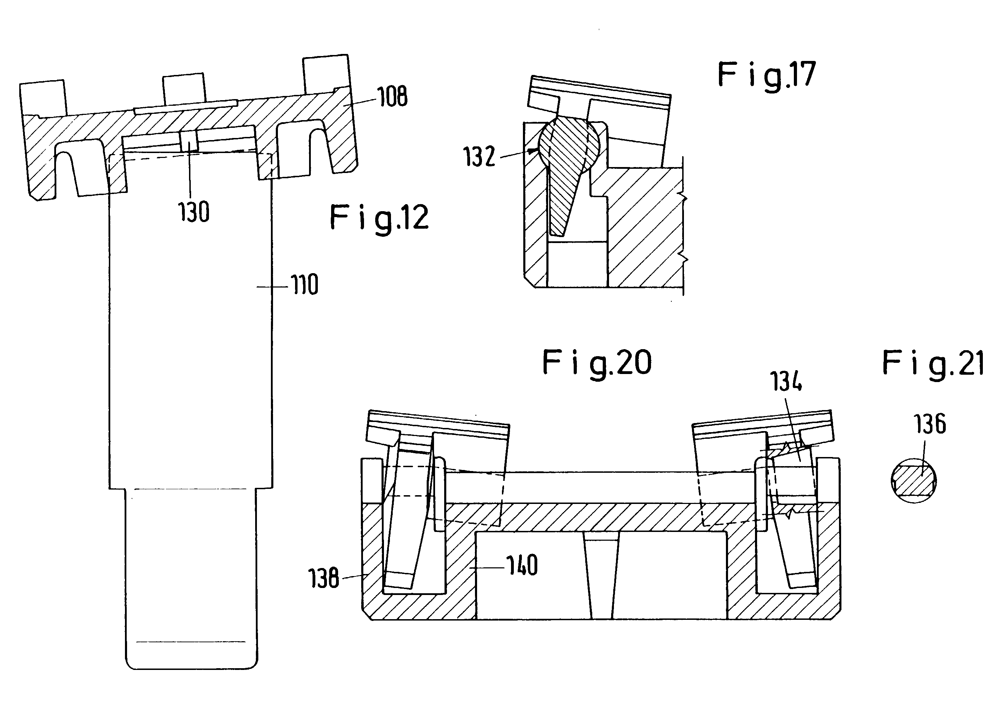

Fig. 5 through 10 show about to scale an embodiment of the apparatus according to the invention. It comprises a substantially parallelepipedic housing 100 made of plastics material. Housing 100 receives a slider 102, also made of plastics material. A stack of sheets is placed between the longitudinal spars 104 of the slider and a display window 106 of the housing. When the slider is fully pushed home into the housing, the stack of sheets is carried by two rails 108 each of which is supported via leaf springs 110 on housing bottom 112. The leading surface F, step G, and support H of Fig. 1 through 4 are realized by the upper side of ribs 114 which are integrally molded with housing bottom 112. Stop J of Fig. 1 through 4 is realized by hook elements 116 which will later be discussed in detail with reference to Fig. 11 through 21. Member B of Fig. 1 through 4 is realized by shoes 118 which are inserted into a separator bar 120 and spring-biased towards the leading surface. Separator bar 120 connects the inner ends of slider spars 104.

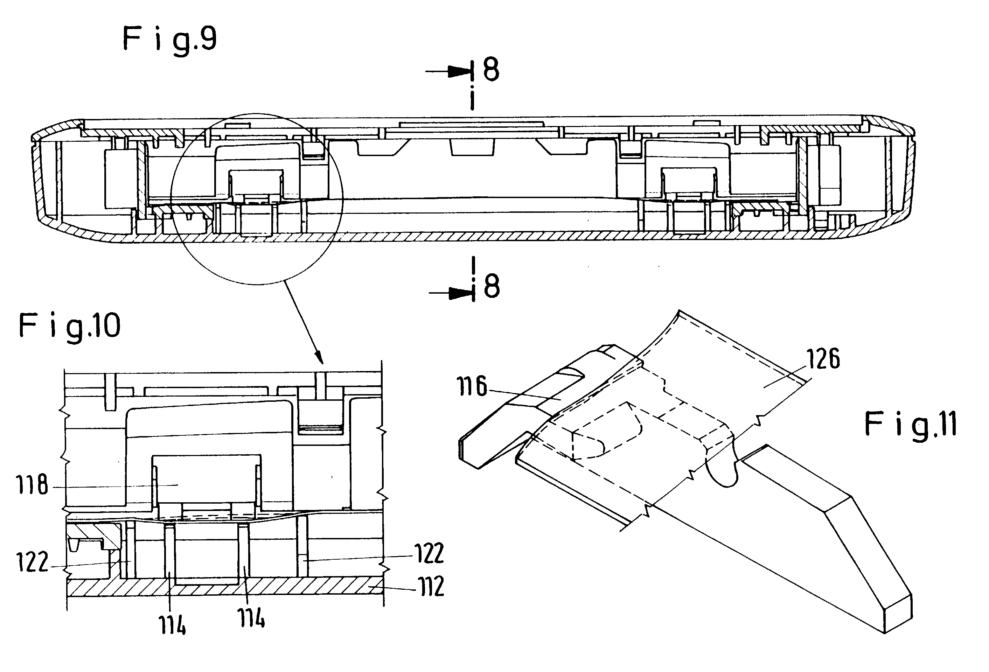

As may be best seen in Fig. 9 and 10, on both sides of ribs 114 spacing elements 122 are provided, each being also rib-shaped. Their size in direction of slider movement is about the same as that of ribs 114; their width is not critical. Their height, i.e. the distance between their upper side and the housing bottom, exceeds the height of the support surface, and this height differential is the greater the farther the spacing element is from the adjacent rib 114. For example, it is readily recognizable in Fig. 10 that the lefthand spacing element 122 is less high than the righthand one. The proper dimensions depend upon the type of sheets to be handled by the apparatus, in particular upon the stiffness and elasticity thereof. A few trials will suffice for common photographic prints. The spacing elements 122 are located on both sides of the track of the respective shoe 118.

Upon the start of the outward movement of slider 102, illustrated in Fig. 5, the inner ends of the sheets (left ends in Fig. 5 through 8) are urged towards the spacing elements 122 by means of separator bar 120, comparable to the situation illustrated in Fig. 2. The outer sheet ends rest on rails 108, and the uppermost sheet of the stack engages longitudinal ledges 124 integrally molded to the inner face of the upper housing shell. It will be seen in Fig. 5 that the lowermost sheet 126 is spaced with its outer end edge from hook 116.

Upon further outwards movement of slider 102 this sheet end edge engages the hook so that sheet 126 cannot be further moved along with the slider. The latter, however, continues to push all those remaining sheets of the stack whose inner ends are closer to the separator bar than the inner end edge of sheet 126 whereby these sheet ends are aligned to one another; the previously non-aligned sheet positions are seen in Fig. 5 while Fig. 6 illustrates them in aligned positions.

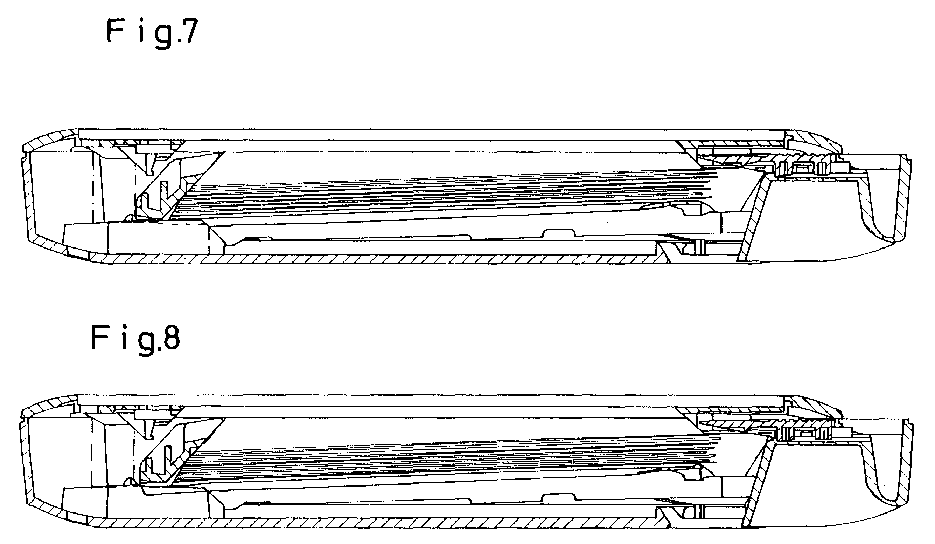

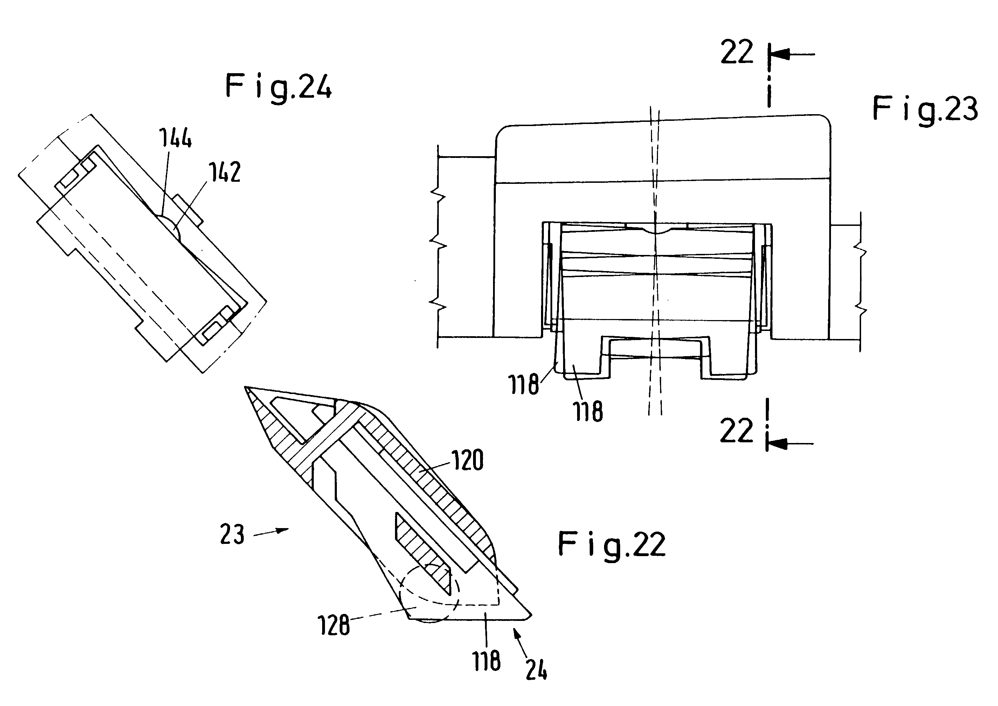

With continued slider withdrawal (Fig. 7) the lowermost portion of shoe 118 engages the inner portion of sheet 126. This portion has passed the step but still is above the support surface because it rests on spacing elements 122. The sloping surface of shoe 118 may now deform the area of the inner portion of sheet 126 between the spacing elements 122 elastically downwards, and the shoe 118 may engage over this area or roll thereon by means of a rotatable roller 128 (Fig. 22). Fig. 8 shows how the shoe has overrun sheet 126.

It will be recognized that the sheet 126 is retained in the housing only if it is safely held by the hooks 116. If the hooks fail sheet 126 is transported out of the housing together with the remainder of the stack.

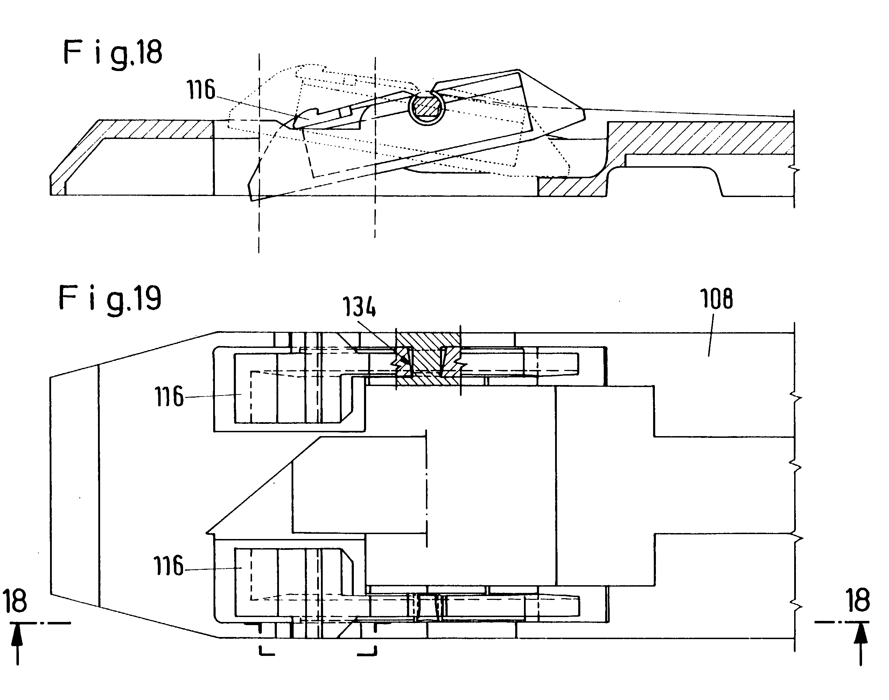

In prior art devices the hooks are provided on rockers which are pivotable about transverse axes adjacent the righthand ends of rails 108 in Fig. 5 through 8. This permits the rockers to adapt themselves to a potential curvature of the sheets about an axis orthogonal to the slider movement direction. It has been found, however, that this is not sufficient, as schematically illustrated in Fig. 11: Sheet 126 to be retained may be bent about an axis parallel to the slider movement with the result that hook 116 is only partly engaged so that the sheet edge may be damaged and/or the sheet escapes from the hook although -- as illustrated in Fig. 11 and in Fig. 18, too -- the hook is undercut and engages with its tip over the sheet edge. According to the present invention, the hook is modified to permit its adaptation to all potential sheet curvatures.

Fig. 12 illustrates a first possibility. While in the devices of the prior art mentioned above the rails 108 are rigidly mounted on the leaf springs 110, according to the present invention the rail has a ridge 130 which engages the leaf spring, and the rail engages beneath the spring on both sides so that it is safely held on the spring but may tilt about a certain angle to both sides. Thus, the rails may adapt themselves coarsely to the curvature of the sheet edge, as indicated in Fig. 13 and 15. A further improvement is achieved by a fine adaptation of each individual hook element as indicated in Fig. 14 and 16, respectively. In fact, it has been found that the curvature of a sheet may vary during its separation from the stack. Therefore, it is preferred that each rocker intimately engages the portion of the sheet with which it is in contact.

Fig. 17 illustrates a possible design: The pivot bearing of the prior art is replaced with a ball-and-socket system 132.

The design illustrated in Fig. 18 through 21 is less complex. When comparing Fig. 19 with the prior art mentioned above it will be recognized that the hook portion of the rockers -- two per rail -- is inwards enlarged so that in plan view the rockers are asymmetrical. While thereby the force per length unit of the sheet edge is reduced, the risk of the situation shown in Fig. 11 is increased. According to the invention, the bearing bore of the rocker is not cylindrical as in the devices of the prior art but trunconical such that the load-bearing portion of the aperture is approximately aligned with the center of the hook portion, the cone flaring outwards. This load-bearing portion which engages over a bearing pin 136 integrally molded with the rail is so narrow that the rocker may tilt about an axis parallel to the longitudinal extension of the rail. The tilt angle is limited in that the lower rocker portion abuts wall portions 138 and 140, respectively, of the rail. This design is inexpensive in mass production and satisfies the requirements although it is not as perfect as a ball-and-socket design.

Generally, the reliability of the apparatus is substantially improved if those components which interact with sheet edges during separation adapt themselves to sheet curvatures, contrary to the prior art where the sheets are forced to adapt themselves to the apparatus. This is true not only for the rails and rockers as discussed above but also for the shoes 118 which move along the rails. Thus, in accordance with the invention, the shoes are mounted in the separator bar not only slidably but also tiltable relative to the bar through a limited angle. Fig. 23 and 24 show that the shoe has a rounded extension 142 which engages into a complementary groove 144 of the separator bar and is guided with sufficient clearance on both sides to permit tilting of the shoe between the two illustrated end positions.

## Claims

1. An apparatus for withdrawing an individual sheet from a stack of sheets, comprising
- a first frame member (100) including at least one set of hook elements (116) adapted to engage a first end edge of said individual sheet,
- a second frame member (102) including at least one set of stack retainer elements (118) adapted to engage second end edges parallel and opposite to said first end edges of all sheets, said stack retainer elements (118) pushing the sheets of said stack except said individual sheet across the latter upon displacement of said second frame member (102) relative to said first frame member (100) in a displacement direction orthogonal to said end edges,
- **characterized in that** the hook elements (116) of said at least one set of hook elements (116) are tiltable about an axis within a plane parallel to said displacement direction and the stack retainer elements (118) of at least one set of stack retainer elements (118) include tiltable shoes (118),whereby said tiltable hook elements (116) and shoes (118) adapt themselves to curvatures of the end edges of the sheets engage therewith.

2. The apparatus of claim 1, **characterized in that** the hook elements (116) form parts of spring-supported rails (108), said rails (108) being tiltable about axes substantially parallel to said displacement direction.

3. The apparatus of claim 1 or 2, **characterized in that** the hook elements (116) are provided on rockers which are pivotable about axes parallel to said sheet end edges and, additionally, are tiltable about axes substantially parallel to said displacement direction.

4. The apparatus of claim 3, **characterized in that** the rockers are supported by ball-and-socket joints (132).

5. The apparatus of claim 3, **characterized in that** the rockers have trunconical bearing apertures (134) and are supported by a narrow rim (136) only on bearing pins.

6. The apparatus of claim 5, **characterized in that** the hook element (116) is asymetrically formed on said rocker and the load-bearing rim (136) of the bearing aperture (134) is disposed substantially in alignment with the hook center.

7. The apparatus of anyone of the claims 1 to 6, **characterized in that** the shoes are slidingly guided in a separator bar (120) and tiltable about an axis parallel to their sliding direction, said axis defining an angle with said displacement direction.

8. The apparatus of anyone of the claims 1 to 7, **characterized in that** the hook elements (116) are undercut and adapted to engage with a tip over the respective sheet edge.

## Patentansprüche

1. Vorrichtung zum Herausziehen eines einzelnen Blattes aus einem Stapel von Blättern, die umfassend:
- ein erstes Rahmenelement (100), das wenigstens eine Gruppe von Hakenelementen (116) enthält, die so beschaffen sind, daß sie mit einer ersten Stimkante des einzelnen Blattes in Eingriff gelangen,
- ein zweites Rahmenelement (102), das wenigstens eine Gruppe von Stapelrückhalteelementen (118) enthält, die so beschaffen sind, daß sie mit zweiten Stimkanten, die zu den ersten Stirnkanten aller Blätter parallel sind und diesen gegenüberliegen, in Eingriff gelangen können, wobei die Stapelrückhalteelemente (118) die Blätter des Stapels mit Ausnahme des einzelnen Blattes bei einer Verschiebung des zweiten Rahmenelements (102) relativ zum ersten Rahmenelement (100) in einer zu den Stirnkanten senkrechten Verschiebungsrichtung über das einzelne Blatt schieben,
- **dadurch gekennzeichnet, daß** die Hakenelemente (116) der wenigstens einen Gruppe von Hakenelementen (116) um eine Achse in einer Ebene parallel zur Verschiebungsrichtung neigbar sind und die Stapelrückhalteelemente (118) wenigstens einer Gruppe von Stapelrückhalteelementen (118) neigbare Schuhe (118) umfassen, wobei sich die neigbaren Hakenelemente (116) und Schuhe (118) an Krümmungen der Stirnkanten der Blätter, mit denen sie in Eingriff sind, anpassen.

2. Vorrichtung nach Anspruch 1, **dadurch gekennzeichnet, daß** die Hakenelemente (116) Teile von federunterstützten Schienen (108) bilden, wobei die Schienen (108) um Achsen, die zur Verschiebungsrichtung im wesentlichen parallel sind, neigbar sind.

3. Vorrichtung nach Anspruch 1 oder 2, **dadurch gekennzeichnet, daß** die Hakenelemente (116) an Kipphebeln vorgesehen sind, die um Achsen, die zu den Blatt-Stirnkanten parallel sind, neigbar sind und außerdem um Achsen, die zur Verschiebungsrichtung im wesentlichen parallel sind, neigbar sind.

4. Vorrichtung nach Anspruch 3, **dadurch gekennzeichnet, daß** die Kipphebel durch Kugelgelenke (132) unterstützt sind.

5. Vorrichtung nach Anspruch 3, **dadurch gekennzeichnet, daß** die Kipphebel kegelstumpfförmige Trägeröffnungen (134) besitzen und durch einen schmalen Kranz (136) lediglich an den Trägerstiften unterstützt sind.

6. Vorrichtung nach Anspruch 5, **dadurch gekennzeichnet, daß** das Hakenelement (116) am Kipphebel asymmetrisch ausgebildet ist und der Lastunterstützungskranz (136) der Trägeröffnung (134) im wesentlichen auf den Hakenmittelpunkt ausgerichtet ist.

7. Vorrichtung nach einem der Ansprüche 1 bis 6, **dadurch gekennzeichnet, daß** die Schuhe in einer Trennerstange (102) gleitend geführt werden und um eine Achse, die zu ihrer Gleitrichtung parallel ist, neigbar sind, wobei die Achse zur Verschiebungsrichtung einen Winkel bildet.

8. Vorrichtung nach einem der Ansprüche 1 bis 7, **dadurch gekennzeichnet, daß** die Hakenelemente (116) unterschnitten und so beschaffen sind, daß sie mit einer Spitze über der jeweiligen Blattkante in Eingriff gelangen.

## Revendications

1. Dispositif destiné à extraire une feuille individuelle d'une pile de feuilles, comprenant:
un premier élément formant châssis (100) comportant au moins un ensemble d'éléments formant crochet (116) conçus pour coopérer avec un premier bord d'extrémité de ladite feuille individuelle,
un second élément formant châssis (102) comportant au moins un ensemble d'éléments de retenue de pile (118) conçus pour coopérer avec des seconds bords d'extrémité parallèles et opposés auxdits premiers bords d'extrémité de toutes les feuilles, lesdits éléments de retenue de pile (118) poussant les feuilles de ladite pile, à l'exception de ladite feuille individuelle, à travers cette dernière lors du déplacement dudit second élément formant châssis (102) par rapport audit premier élément formant châssis (100) dans une direction de déplacement orthogonale auxdits bords d'extrémité,
**caractérisé en ce que** les éléments formant crochet (116) dudit jeu d'éléments formant crochet (116) peuvent basculer autour d'un axe à l'intérieur d'un plan parallèle à ladite direction de déplacement et les éléments de retenue de pile (118) d'au moins un ensemble d'éléments de retenue de pile (118) comportent des sabots pouvant basculer (118), de telle sorte que lesdits éléments formant crochet (116) et sabots (118) pouvant basculer s'adaptent eux mêmes aux courbures des bords d'extrémité des feuilles avec lesquels ils coopèrent.

2. Dispositif selon la revendication 1, **caractérisé en ce que** les éléments formant crochet (116) constituent des parties de rails supportés de manière élastique (108), lesdits rails (108) pouvant basculer autour d'axes sensiblement parallèles à ladite direction de déplacement.

3. Dispositif selon la revendication 1 ou 2, **caractérisé en ce que** les éléments formant crochet (116) sont placés sur des éléments basculant qui peuvent pivoter autour d'axes parallèles auxdits bords d'extrémité de feuille et qui peuvent, de plus, basculer autour d'axes sensiblement parallèles à ladite direction de déplacement.

4. Dispositif selon la revendication 3, **caractérisé en ce que** les éléments basculants sont supportés par des articulations à rotule (132).

5. Dispositif selon la revendication 3, **caractérisé en ce que** les éléments basculant comportent des orifices de palier tronconiques (134) et sont supportés par une nervure étroite (136) seulement sur des broches formant palier.

6. Dispositif selon la revendication 5, **caractérisé en ce que** l'élément formant crochet (116) est formé de manière asymétrique sur ledit élément basculant et la nervure support de charge (136) de l'orifice de palier (134) est disposée sensiblement dans l'alignement de l'axe de crochet.

7. Dispositif selon l'une quelconque des revendications 1 à 6, **caractérisé en ce que** les sabots sont guidés de manière à pouvoir coulisser sur une barre de séparation (120) et peuvent basculer autour d'un axe parallèle à leur direction de coulissement, ledit axe définissant un certain angle par rapport à ladite direction de déplacement.

8. Dispositif selon l'une quelconque des revendications 1 à 7, **caractérisé en ce que** les éléments formant crochet (116) sont en dépouille et adaptés pour coopérer avec une partie effilée au-dessus du bord de feuille respectif.
